# EUROPÄISCHE PATENTANMELDUNG

(11) **EP 1 728 439 A1**
(43) Veröffentlichungstag der Anmeldung: **06.12.2006**
(21) Anmeldenummer: 06011473.3
(22) Anmeldetag: 02.06.2006
(51) Int. Cl.: A23L 1/00, A23L 1/39, A23L 1/40, A23L 1/22

(54) **Modulares Nahrungsmittelsystem**

(30) Priorität: 03.06.2005 DE 102005026037
(71) Anmelder: Bernhard Zamek GmbH & Co. KG, 40559 Düsseldorf (DE)
(72) Erfinder: Zamek, Marcus, 40215 Düsseldorf (DE)
(74) Vertreter: Von Renesse, Dorothea

(57) **Zusammenfassung**

Nahrungsmittelsystem umfassend eine im wesentlichen geschmacksneutrale Binder-Komponente und mindestens eine Geschmacks-Komponente, wobei die Binder-Komponente und die Geschmacks-Komponente gesondert und verkaufsfertig vorliegen.

## Beschreibung

Die Erfindung betrifft den Bereich der Fertig- und Teilfertignahrungsmittel.

In den Industrieländern kommt innerhalb des Lebensmittelsektors dem Bereich der Fertig- bzw. Teilfertiggerichte (Convenience Food) zunehmend Bedeutung zu. Dies ist im wesentlichen darauf zurückzuführen, daß die Verbraucher immer weniger bereit sind, Zeit und auch gedanklichen Aufwand für die Zubereitung von Nahrungsmitteln und den vorherigen Erwerb der dafür benötigten Zutaten einzusetzen. Viel eher wird es von einem immer größer werdenden Anteil der Bevölkerung gewünscht, Fertig- oder Teilfertiggerichte zu erwerben, die eine schnelle Zubereitung und eine einfache Vorratshaltung erlauben. Nur damit kann die gewünschte Kurzfristigkeit und Spontaneität der Lebensmittelzubereitung im eigenen Hause problemlos gewährleitstet werden.

Im Bereich der Großküchen (z. B. Kantinen oder Mensen) besteht seit eh die Notwendigkeit, große Mengen an Nahrungsmitteln zu bevorraten und zudem eine gleichbleibende und verläßliche Qualität der ausgegebenen Gerichte zu garantieren. In Restaurants besteht die besondere Herausforderung zudem darin, ein umfangreiches Angebot und die dafür erforderliche Vorratshaltung mit der Kurzfristigkeit der Bestellungen der Gäste zu kombinieren und auch auf Sonderwünsche der Gäste eingehen zu können. Insbesondere Großküchen müssen bei der Gestaltung ihrer Vorratshaltung und der Versorgung der Gäste auf die Wirtschaftlichkeit ihres Tuns achten. Der Logistik der Vorratshaltung kommt dabei eine wesentliche Rolle zu.

Sowohl im individuellen Bereich als auch im Großverbraucherbereich besteht daher übereinstimmend das Problem, auf der Grundlage einer einfachen Vorratshaltung schnell zuzubereitende Fertig- oder Teilfertiggerichte anzubieten, die gleichwohl den hohen geschmacklichen Anforderungen der Verbraucher gerecht werden.

Die Aufgabe der vorliegenden Erfindung besteht daher darin, ein System für ein Fertig- oder Teilfertignahrungsmittel (z.B. Suppen, Saucen oder Süßspeisen) bereitzustellen, das eine effiziente Vorratshaltung und eine schnelle Zubereitung erlaubt.

Diese Aufgabe wird durch ein Fertignahrungsmittelsystem nach Anspruch 1 gelöst. Vorteilhafte Weiterentwicklungen sind Gegenstand entsprechender Unteransprüche sowie der nebengeordneten Ansprüche.

Gemäß dem Hauptanspruch betrifft die Erfindung ein Nahrungsmittelsystem mit einer Binder-Komponente, die im wesentlichen geschmacksneutral ist, und mindestens einer Komponente, die eine geschmackliche Richtung vorgibt (Geschmacks-Komponente). Beide Komponenten liegen getrennt vor und sind für sich genommen verkaufsfertig, d.h. sie sind in der Regel separat verpackt.

Der Grundgedanke der Erfindung besteht darin, dem Verbraucher die Komponenten jeweils separat verpackt als Marktprodukt anzubieten, und es dem Verbraucher selber zu überlassen, sie anschließend - ggf. noch unter Ergänzung weiterer Zutaten - zu einem Fertig- oder Teilfertiggericht zusammenzufügen. Dadurch wird ermöglicht, daß der Verbraucher die Komponenten in Anpassung an seine individuellen Wünsche oder Bedürfnisse kombinieren kann. Die damit erreichten vielfältigen Kombinationsmöglichkeiten erlauben bereits bei einer an sich begrenzten Anzahl an Einzelkomponenten die Zubereitung eines umfangreichen Angebots an fertigen Speisen oder Teilfertiggerichten. Damit wird es möglich, die Vorratshaltung auf nur wenige Komponenten zu reduzieren und gleichwohl ein reichhaltiges Speiseangebot bereitzuhalten.

Neben der Flexibilität der Zusammenstellungen erlaubt das erfindungsgemäße System den Einsatz variabler Mengen der Einzelkomponenten. Somit werden anderenfalls entstehende Restmengen vermieden.

Das erfindungsgemäße System hat des weiteren den Vorteil, daß es einerseits einen hohen Grad an "Convenience" aufweist ― das heißt, die Speisen sind unkompliziert und einfach zuzubereiten - und andererseits seitens des Verbrauchers gleichwohl eine Einflußnahme auf die geschmackliche Ausrichtung offenhält.

Es ist ein weiterer Vorteil des erfindungsgemäßen Systems, daß es in der Speiseversorgung nach dem sogenannten "Cook and Chill"-Verfahren eingesetzt werden kann. Dabei handelt es sich um ein Versorgungssystem, das zunächst auf der konventionellen Zubereitung der Speisen beruht, die Speisen anschließend jedoch innerhalb einer begrenzten Zeit abgekühlt, bei niedrigeren Temperaturen gelagert und erst unmittelbar vor dem Verzehr wieder regeneriert werden. Die "Cook and Chill"-Technologie ist dem Fachmann bekannt. Sie besteht im wesentlichen aus den Schritten i) des Garens des Gerichts, ii) des Schnellkühlens des Gerichts und dessen anschließender Lagerung unter Kühlung bis zu 72h und iii) dem Regenerieren des Gerichts.

Darüber hinaus führt das erfindungsgemäße System zu einer hohen Produktqualität, da es eine hohe geschmackliche Konstanz der damit zubereiteten Fertig- oder Teilfertiggerichte ermöglicht. Dieser Vorteil ist vor allem für den Großküchenbereich von besonderem Nutzen.

Das erfindungsgemäße System umfaßt mindestens eine Binder-Komponente mit einem Bindemittel, das die Basis des Nahrungsmittels darstellt. Bei einem Bindemittel handelt es sich um jedes Mittel, das der Eindickung von Flüssigkeiten dient. Als Bindemittel in diesem Sinne können demnach z.B. alle Zutaten verwendet werden, die Wasser binden. Diese Funktion kann allerdings auch von Emulgatoren für Fett und Wasser übernommen werden. So können beispielsweise verschiedene Mehle wie Weizen- oder Maismehl oder auch Kartoffelstärke eingesetzt werden. Darüber hinaus können auch Verdickungsmittel wie Guarkernmehl oder Sahne, Eigelb, Gelatine, Cellulose oder Xanthane Verwendung finden.

In einer besonders vorteilhaften Ausführungsform enthält die erfindungsgemäß einsetzbare Binder-Komponente geschmacksneutrale Stärken, insbesondere agglomerierte Stärke. Es hat sich gezeigt, daß ein Mengenanteil an Stärke von 20 bis 50 %, insbesondere von 30 bis 40 %, besonders vorteilhaft ist.

Es können sowohl native als auch modifizierte Stärken oder Kombinationen verschiedenartiger Stärken eingesetzt werden. Beispiele für dem Fachmann bekannte, erfindungsgemäß einsetzbare modifizierte Stärken sind E1404 (oxidierte Stärke), E1410 (Monostärkephosphat), E1412 (Distärkephosphat), E1413 (phosphatiertes Distärkephosphat), E1414 (acetyliertes Distärkephosphat), E1420 (acetylierte Stärke), E1422 (acetyliertes Distärkeadipat), E1440 (Hydroxypropylstärke), E1442 (Hydroxypropyldistärkephosphat), E1450 (Stärkenatriumoctenylsuccinat), E1451 (acetylierte oxidierte Stärke).

In einer besonders vorteilhaften Ausführungsform enthält die Binder-Komponente darüber hinaus etwa 20 bis 50 %, vorzugsweise etwa 25 bis 45 %, Füllstoff. Bei Füllstoffen handelt es sich um Zusatzstoffe, die einen Teil des Volumens des Lebensmittels ausmachen, ohne jedoch nennenswert zu dessen Geschmack beizutragen. Die Füllstoffe können ihrerseits einen gewissen Anteil an verwertbarer Energie enthalten, oder aber energetisch - z.B. wie Ballaststoffe - überwiegend neutral sein. Erfindungsgemäß können daher beispielsweise Cellulose, Methylcellulose, Pektine sowie Dextrose, Maltodextrin oder Lactose als Füllstoff eingesetzt werden. In einer weiteren besonders vorteilhaften Ausführungsform enthält die Binder-Komponente etwa 35% an Füllstoff.

Weiterhin hat es sich herausgestellt, daß der Zusatz von 5 bis 35 %, vorzugsweise zwischen 10 % und 30 % Fett zu der Binder-Komponente von Vorteil ist. Das Fett verbessert die Streufähigkeit der übrigen Inhaltstoffe der Binder-Komponente und erleichtert somit seine Handhabung.

In einer besonders bevorzugten Ausführungsform des erfindungsgemäßen Nahrungsmittelsystems wird eine Binder-Komponente (Basiskomponente) eingesetzt, die zu 20 bis 50 %, vorzugsweise 30 bis 40% Stärke, zu 20 bis 50 %, vorzugsweise zwischen 25 und 45% Füllstoff und 5 bis 35 %, insbesondere 10 bis 30 % Fett enthält. In einer alternativen Ausführungsform kann die Binder-Komponente 27 bis 35% Stärke, 30 bis 65% Füllstoff und 8 bis 29% Fett enthalten. Eine derartige Binder-Komponente führt zu einer vorteilhaften Sofort-Löslichkeit der zusammengefügten erfindungsgemäßen Einzelkomponenten, so daß sich die fertige Zusammensetzung leicht sowohl kalt als auch warm zu einer verzehrfertigen Speise verarbeiten läßt. Gegebenenfalls ist es erforderlich, die zusammengefügten Komponenten aufzukochen.

Die erfindungsgemäße Binder-Komponente kann vorteilhafterweise eine bestimmte Farbe aufweisen. In Abhängigkeit von ihrer Farbe kann die Binder-Komponente als Basismaterial für bestimmte Typen von Saucen oder Suppen fungieren. So kann beispielsweise eine rote Binder-Komponente als Ausgangspunkt für "rote Saucen" dienen. Eine weiße Binder-Komponente kann beispielsweise die Basis für Bechamel-Saucen darstellen. Eine beliebige Farbgebung der Binder-Komponente ist möglich.

Das erfindungsgemäße System enthält des weiteren mindestens eine Geschmacks-Komponente. Diese Geschmacks-Komponente ist dadurch definiert, daß sie mindestens einen Geschmacksstoff enthält.

Im Sinne der Erfindung handelt es sich bei Geschmacksstoffen um alle diejenigen Stoffe, die bei dem Verbraucher einen geschmacklichen Eindruck erzeugen. Dabei kann es sich um natürliche, synthetische oder auch naturidentische Substanzen oder Substanzmischungen handeln. Als Geschmacksstoffe werden auch Würzmittel oder Gewürze verstanden. Sie können in unterschiedlicher Form - z.B. frisch, getrocknet, gemahlen, pastös oder als Extrakt vorliegen.

Es kann jedoch auch von Vorteil sein, eine bestimmte Geschmacksrichtung durch eine aufeinander abgestimmte Mischung verschiedener Geschmacksstoffe zu erzeugen. Durch die Kombination der im wesentlichen geschmacksneutralen Binder-Komponente mit der Geschmacks-Komponente erhält das über diese Kombination bereitgestellte Fertignahrungsmittel den Geschmack der Geschmacks-Komponente.

Um dem Verbraucher eine individuelle geschmackliche Gestaltungsmöglichkeit offenzuhalten, ist es von Vorteil, daß die Geschmacks-Komponente lediglich eine allgemeine Geschmacksrichtung festlegt. So kann die Geschmacks-Komponente ("Fond") beispielsweise lediglich die allgemeine Geschmacksrichtung (geschmackliche Grundlage) "Huhn", "Gemüse" oder "Braten" aufweisen. Der Verbraucher ― entweder der individuelle Endverbraucher oder der Großverbraucher - kann aufbauend auf dieser Geschmackrichtung nach individuellem Empfinden und Bedürfnis weitere Geschmackstoffe oder geschmackgebende Zusätze beimengen.

In einer vorteilhaften Weiterentwicklung des Systems kann eine zweite Geschmacks-Komponente vorgesehen werden, die die geschmackliche Feinausrichtung des fertigen Nahrungsmittels festlegt ("Topnote"). Auch diese Komponente enthält ein oder mehrere Geschmacksstoffe im Sinne der obigen Definition. Die Verwendung dieser Komponente trägt insbesondere zu dem erfindungsgemäßen Vorteil der großen geschmacklichen Konstanz der zubereiteten Speise und daher zu der hohen Produktqualität bei.

Die "erste" Geschmacks-Komponente zur etwaigen Festlegung der Geschmacksrichtung enthält vorteilhafterweise einen gewissen Anteil an Hefeextrakt, Sahne, Gemüse oder Fleisch. Das Gemüse und das Fleisch können auch als Extrakt vorliegen. Dieser Anteil liegt vorteilhafterweise über 5 und unter oder bei 40 %.

Die Einzelkomponenten des erfindungsgemäßen Systems liegen vorzugsweise in Pulverform vor und werden mit einer Flüssigkeit, beispielsweise Wasser angerührt. Es ist jedoch auch möglich, alle oder einzelne Komponenten des Systems als Flüssigkeit, Paste oder Granulat vorzuhalten.

In einer vorteilhaften Ausführungsform wurden die Komponenten des erfindungsgemäßen Systems so weiterentwickelt, daß ihre jeweilige Dosierung nicht nur durch die Erfassung des Gewichts, sondern auch verläßlich über volumetrische Mengenbestimmung erfolgen kann. Dies hat den Vorteil der nochmals vereinfachten und schnellen Handhabung bei der Zubereitung. Die Komponenten sind vorteilhafterweise so entwickelt, daß deren Dosierung über Hohlmaße, deren Volumen an die relevanten Mengen angepasst sind, erfolgen kann. Diese Hohlmaße können dem erfindungsgemäßen Nahrungsmittelsystem beigefügt sein.

Sofern das erfindungsgemäße System für die Zubereitung einer Süßspeise verwendet wird, kann sowohl bei der ersten als auch bei der zweiten Geschmacks-Komponente auf den Zusatz von Fleisch-, Gemüse- oder Hefeextrakt verzichtet werden. Eine solche Verwendung der Erfindung unterscheidet sich von der Verwendung zur Bereitstellung einer Sauce oder Suppe vor allem durch die Auswahl der Geschmacksstoffe sowie der Fette und der Menge und Art des Bindemittels der Binder-Komponente.

Das Fertignahrungsmittel wird hergestellt, indem die Komponenten des erfindungsgemäßen Systems gemischt, in einer Flüssigkeit (z.B. Wasser oder Milch) verrührt und ggf. aufgekocht werden.

Das erfindungsgemäße System kann des weiteren eine Komponente mit Vitalstoffen umfassen ("Vitalstoff-Komponente"). Unter "Vitalstoff" wird jede Substanz verstanden, die der Verbesserung, Aufrechterhaltung der geistigen oder körperlichen Gesundheit des Menschen, sowie der Vorbeugung oder Linderung von Beschwerden oder Gebrechen und nicht primär der Ernährung dient. Beispiele für Vitalstoffe sind Vitamine, Mineralstoffe oder Nahrungsergänzungsmittel.

### Beispiel 1

| **Tomatenrahmsuppe** | | **Volumendosierung 10 Liter (25 Port.)** |
|---|---|---|
| | **Masse in g** | **Masse in ml** |
| A.) Binder-Komponente (Roter Binder) | 1000 | **1500 ml** |
| B.) Geschmacks-Komponente (Fond Tomate) | 264 | **300 ml** |
| C.) "Topnote" Tomatensauce | 217 | **300 ml** |
| D.) Tomatenmark | 800 | |
| E.) Wasser | 10000 | **10000 ml** |
| F.) Sahne 32 % | 600 | **600 ml** |
| G.) Tomatenwürfel Konserve | 1000 | |

### Beispiel 2

| **Bolognese-Sauce** | | |
|---|---|---|
| | **Volumendosierung 10 Liter Soße (100 Port** | |
| | **Masse in g** | **Masse in ml** |
| A.) Binder-Komponente (Roter Binder) | 1000 | **1500 ml** |
| B.) Binder-Komponente (Brauner Binder) | 315 | **300 ml** |
| C.) Geschmacks-Komponente (Fond Braten) | 249 | **300 ml** |
| D.) Geschmacks-Komponente (Fond Tomate) | 264 | **300 ml** |
| E.) "Topnote" Bolognese | 408 | **600 ml** |
| F.) Wasser | 10000 | **10000 ml** |
| G.) Hackfleisch | 10000 | |
| H.) Tomatenmark | 800 | |
| I.) Zwiebeln | 1000 | |

### Beispiel 3

| **Rahmgeschnetzeltes** | | **Volumendosierung 10 I Soße (100 Port.)** |
|---|---|---|
| | **Masse in g** | **Masse in ml** |
| A.) Binder-Komponente (Brauner Binder) | 949 | **1500 ml** |
| B.) Geschmacks-Komponente (Fond Braten) | 249 | **300 ml** |
| C.) "Topnote" Schweine - Bratensauce | 94 | **150 ml** |
| D.) Wasser | 6000 | **6000 ml** |
| E.) Sahne 32 % | 4000 | **4000 ml** |
| F.) Schweinefleisch | 10000 | |
| G.) Pilze | 2000 | |

## Patentansprüche

1. Nahrungsmittelsystem umfassend
- eine im Wesentlichen geschmacksneutrale Binder-Komponente und
- mindestens eine Geschmacks-Komponente,
wobei die Binder-Komponente und die Geschmacks-Komponente gesondert vorliegen.

2. Nahrungsmittelsystem nach Anspruch 1, **dadurch gekennzeichnet, daß** die Geschmacks-Komponente Geschmacksstoffe für eine ausgewählte Geschmacksrichtung (geschmackliche Grundlage) enthält.

3. Nahrungsmittelsystem nach Anspruch 1 oder 2, **gekennzeichnet durch** eine zweite, gesonderte und verkaufsfertige Geschmacks-Komponente.

4. Nahrungsmittelsystem nach Anspruch 3, **dadurch gekennzeichnet, daß** die zweite Geschmacks-Komponente Geschmacksstoffe zur geschmacklichen Feinausrichtung des Geschmacks der ersten Geschmacks-Komponente enthält.

5. Nahrungsmittelsystem nach einem der vorherigen Ansprüche, **dadurch gekennzeichnet, daß** die Binder-Komponente 20 bis 50%, vorzugsweise 30 bis 40% Bindemittel, vorzugsweise Stärke, enthält.

6. Nahrungsmittelsystem nach Anspruch 5, **gekennzeichnet durch** mindestens eine agglomerierte Stärke.

7. Nahrungsmittelsystem nach Anspruch 6, **gekennzeichnet durch** mindestens eine modifizierte Stärke, insbesondere ausgewählt aus der Gruppe folgender Stärken: E1404 (oxidierte Stärke), E1410 (Monostärkephosphat), E1412 (Distärkephosphat), E1413 (phosphatiertes Distärkephosphat), E1414 (acetyliertes Distärkephosphat), E1420 (acetylierte Stärke), E1422 (acetyliertes Distärkeadipat), E1440 (Hydroxypropylstärke), E1442 (Hydroxypropyldistärkephosphat), E1450 (Stärkenatriumoctenylsuccinat), E1451 (acetylierte oxidierte Stärke).

8. Nahrungsmittelsystem nach einem der vorherigen Ansprüche, **dadurch gekennzeichnet, daß** die Binder-Komponente 20 bis 50%, vorzugsweise etwa 25 bis 45% eines Füllstoffs enthält.

9. Nahrungsmittelsystem nach einem der vorherigen Ansprüche, **dadurch gekennzeichnet, daß** die Binder-Komponente 5 bis 35%, vorzugsweise 10 bis 30%, Fettanteil aufweist.

10. Nahrungsmittelsystem nach einem der vorherigen Ansprüche 1 bis 7, **dadurch gekennzeichnet, daß** die Binder-Komponente 27 bis 35% Stärke, 30 bis 65% Füllstoff und 8 bis 29% Fett enthält.

11. Nahrungsmittelsystem nach einem der vorherigen Ansprüche, **gekennzeichnet durch** eine Vitalstoff-Komponente.

12. Nahrungsmittelsystem nach einem der vorherigen Ansprüche, **dadurch gekennzeichnet, daß** es sowohl kalt als auch warm sofort löslich ist.

13. Binder-Komponente für die Herstellung von Speisen enthaltend
i. 20 bis 50 %, vorzugsweise 30 bis 40% Bindemittel
ii. 20 bis 50 %, vorzugsweise 25 bis 45% Füllstoff und
iii. 5 bis 35 %, vorzugsweise 10 bis 30% Fett.

14. Binder Komponente für die Herstellung von Speisen enthaltend
i. 27 bis 35% Bindemittel
ii. 30 bis 65% Füllstoff und
iii. 8 bis 29% Fett.

15. Verfahren zum Zubereiten von Nahrungsmitteln umfassend folgende Schritte:
- Bereitstellen eines Nahrungsmittelsystems nach einem der Ansprüche 1 bis 12;
- volumetrisches Bestimmen einer vordefinierten Menge der Komponenten;
- Zusammenbringen der Komponenten in einer Flüssigkeit.

16. Verfahren nach Anspruch 15, **dadurch gekennzeichnet, daß** das Nahrungsmittel gegart, schnellgekühlt, kühl gelagert und zum Verzehr regeneriert wird.
